# EUROPÄISCHE PATENTANMELDUNG

(11) **EP 1 795 513 A1**
(43) Veröffentlichungstag der Anmeldung: **13.06.2007**
(21) Anmeldenummer: 05026937.2
(22) Anmeldetag: 09.12.2005
(51) Int. Cl.: C04B 35/573

(54) **Verfahren zur Herstellung von Silicumcarbid-Keramik**

(71) Anmelder: SGL Carbon AG, 65203 Wiesbaden (DE)
(72) Erfinder: Witzke, Tim, 86356 Neusäss (DE); Benitsch, Bodo, 86647 Buttenwiesen (DE)

(57) **Zusammenfassung**

Die Erfindung stellt ein von Hoizkohlemehl mit einer Partikelgröße von maximal 40 µm als Ausgangsstoff ausgehendes Verfahren zur Herstellung dichter, kompakter, homogener und isotroper keramischer Körper mit einem hohen Gehalt am Siliciumcarbid und einer geometrischen Dichte von mindestens 2,80 g/cm³ bereit.

## Beschreibung

Die Erfindung betrifft ein Verfahren zur Herstellung von Siliciumcarbid enthaltender Keramik.

Es ist bekannt, keramische Körper durch Silicierung kohlenstoffhaltiger Vorkörper herzustellen. Der kohlenstoffhaltige Vorkörper kann durch Pyrolyse von Holz gewonnen werden. Diese Verfahrensweise ist wirtschaftlich interessant wegen der Verwendung nachwachsender Rohstoffe. Nachteilig ist jedoch, dass die Pyrolyse von Holz mit einem hohen Materialschwund verbunden ist, und dass innerhalb des pyrolysierten Holzkörpers und auch innerhalb des daraus hergestellten keramischen Körpers die ursprüngliche Struktur des Holzes erhalten bleibt, so dass eine inhomogene, in ihrer Struktur und ihren Eigenschaften anisotrope Keramik erhalten wird.
Zur Verbesserung der Homogenität wurde vorgeschlagen, einen pyrolysierbaren Körper einzusetzen, der Holz in gemahlener Form enthält. Durch Mahlen von Holz erhaltenes Pulver (Holzmehl) wird mit einem Bindemittel versetzt und zu einem Formkörper (Grünkörper) verpresst. Der so erhaltene Formkörper aus einem Holzwerkstoff wird pyrolysiert und mittels Flüssigsilicierverfahren zumindest teilweise in Siliciumcarbidkeramik überführt. So erhaltene Keramik hat eine Dichte von bis zu 3,07 g/cm³ und weist einen volumenbezogenen SiC-Gehalt von bis zu 86,4 % auf. (Hofenauer, A. et al Development of specific wood-based composites as precursors for biomorphic SiC-ceramics. Proc. of Materials Week 2002 in Munich; Deutsche Gesellschaft für Materialkunde, Frankfurt). Durch die Zerkleinerung des Holzes zu Holzmehl wird zwar die Homogenität und Isotropie des Grünkörpers und der Keramik verbessert. Jedoch erlaubt dieses Verfahren ebenso wie das von einer unzerkleinerten Holzstruktur ausgehende keine endkonturnahe Fertigung, denn der Volumenschwund bei der Pyrolyse des Grünkörpers beträgt bis zu 65 %.
Der Ersatz des Edukts Holzmehl durch Holzkohle-Mehl vermindert das Problem des Volumenschwunds bei der Pyrolyse, ohne dass auf den Einsatz nachwachsender Rohstoffe verzichtet werden muss. Holzkohle ist ein Gemisch organischer Verbindungen und besteht in der Regel aus Kohlenstoff (81-90 Vol.%), Wasserstoff (3 Vol.%), Sauerstoff (6 Vol.%), Stickstoff (Vol.1%), Feuchtigkeit (6 Vol.%) und Asche (1-2 Vol.%). Sie entsteht z.B. bei der Erhitzung von lufttrockenem Holz (13-18 Vol.% Restfeuchtigkeit) in einer eisernen Retorte unter Luftabschluss bei 275 °C, wobei die Innentemperatur auf 350 bis 400 °C ansteigt. Durch diesen Holzverkohlung oder Holzverkokung genannten Prozess erhält man eine Ausbeute von ca. 35 Vol.% an Holzkohle als festen Pyrolyserückstand neben gasförmigen Zersetzungsprodukten.
Thermogravimetrische Untersuchungen zeigen jedoch, dass eine nahezu vollständige Pyrolyse des Ausgangsmaterials erst bei Temperaturen von ca. 900 °C erreicht wird. Demzufolge liegt in Holzkohle, die bei Temperaturen bis 400 °C gewonnen wurde, noch ein Restanteil nicht pyrolysierter Holzbestandteile vor. Es bedarf somit einer weiteren Pyrolyse bei Temperaturen bis 900 °C, um die Zersetzung der noch vorhandenen ursprünglichen Holzbausteine abzuschließen. Da jedoch bei der Herstellung der Holzkohle bereits eine teilweise Pyrolyse erfolgte, ist zu erwarten, dass bei der Pyrolyse von Holzkohle weniger Volumenschwund eintritt als bei der Pyrolyse von Holz bei gleichen Maximaltemperaturen.

Aus der Patentanmeldung DE 31 08 266 ist ein Verfahren zur Herstellung poröser Siliciumcarbidkörper bekannt, bei welchem als Ausgangsmaterial u.a. Holzkohle eingesetzt werden kann. Das Verfahren umfasst die Schritte
- Pressen eines Grünkörpers aus Kohlenstoffpulver einheitlicher Siebfraktion, z.B. Holzkohle- oder Pflanzenkohlepulver, das mit einem verkokbaren Binder, z.B. Phenolharz, Pech oder Teer, versetzt ist
- Wärmebehandlung bei einer Temperatur zwischen 40 und 200 °C zum Austreiben flüchtiger Bestandteile
- Verkokung (Pyrolyse) bei 850 °C zu einem porösen "Kohlekörper"
- Silicierung mit Siliciumdampf bei einer Temperatur zwischen 1650 und 1950 °C
Bevorzugt wird zur Herstellung des Vorkörpers Kohlepulver mit einer Siebfraktion von einigen 100 µm eingesetzt, speziell eine der folgenden Siebfraktionen: 53 bis 105 µm, 105 bis 150 µm, 150 bis 350 µm, 300 bis 600 µm, 600 bis 1.000 µm. Die Auswahl der Siebfraktionen in DE 31 08 266 war dadurch bedingt, dass das Zielprodukt ein poröser, als Filter mit hoher Durchflussleistung anwendbarer keramischer Körper war.
Der massebezogene Gehalt des verkokbaren Bindemittels im Grünkörper beträgt zwischen 15 und 30 %, bevorzugt sind 20 %. Die Dichte des bei 850 °C verkokten Vorkörpers liegt zwischen 0,5 und 0,9 g/cm³, die Dichte des silicierten Körpers bei 2,0 bis 2,3 g/cm³. Diese relativ geringer Dichte (die theoretische Dichte von Siliciumcarbid beträgt 3,22 g/cm³) ist ein Zeichen für die hohe Porosität der erhaltenen keramischen Körper.

DE 30 08 266 lehrt ausschließlich die Herstellung poröser Körper.

Siliciumcarbid ist aber bekanntermaßen auch ein hervorragender Konstruktionswerkstoff für die Herstellung von mechanisch oder/und chemisch oder/und thermisch stark beanspruchten Bauteilen wie Lager, Pumpenräder, Teile von Chemieanlagen u.ä.. Hierfür wird selbstverständlich ein dichter, d.h. keine offene Porosität aufweisender Werkstoff benötigt.

Die Aufgabe der vorliegenden Erfindung besteht darin, ein von Holzkohle als Ausgangsstoff ausgehendes Verfahren zur Herstellung dichter (d.h. keine offene Porosität aufweisender), kompakter, homogener und isotroper keramischer Körper mit einem hohen Gehalt am Siliciumcarbid bereitzustellen. Dies manifestiert sich in einer hohen geometrischen Dichte (Verhältnis der Masse des Körpers zu seinem geometrischen Volumen). Mit dem Verfahren gemäß der vorliegenden Erfindung lassen sich Siliciumcarbid enthaltende keramische Körper mit einer geometrischen Dichte von mehr als 2,80 g/cm³, bevorzugt mehr als 2,95 g/cm³ und besonders bevorzugt mehr als 3,00 g/cm³ herstellen.

Das erfindungsgemäße Verfahren umfasst die Schritte:
- Bereitstellen von Holzkohlemehl, dessen Partikel eine Korngröße von maximal 40 µm aufweisen
- Herstellen eines optisch homogenen Gemischs aus dem Holzkohlemehl und einem carbonisierbaren Binder
- Herstellung eines Formkörpers (Grünkörper) aus diesem Gemisch
- Carbonisierung (Pyrolyse) des Grünkörpers bei Temperaturen von ca. 900 °C
- optional Nachverdichtung des carbonisierten Grünkörpers mit einem carbonisierbaren Binder und erneute Carbonisierung
- optional Graphitierung des carbonisierten Vorkörpers bei Temperaturen von über 1400 °C
- Silicierung des carbonisierten Grünkörpers durch Infiltration mit einer Siliciumschmelze.

Weitere Details, Varianten und Vorteile der Erfindung können der folgenden ausführlichen Beschreibung entnommen werden.

Als Ausgangsmaterial für das erfindungsgemäße Verfahren kann handelsübliche Grill-Holzkohle benutzt werden. Bevorzugt wird nach der Norm DIN 51749 zertifizierte Holzkohle eingesetzt. Die Holzkohle sollte einen möglichst niedrigen Aschewert aufweisen. Die vorstehend genannte DIN-Norm lässt 4 % zu, für bestimmte Anwendungen kann jedoch eine höhere Reinheit und damit ein geringerer Aschegehalt erforderlich sein.

Die groben, mehrere Zentimeter großen Körner der handelsüblichen Holzkohle werden in geeigneter Weise, z.B. mittels eines Backenbrechers, zerkleinert, und durch Sieben die gewünschte Fraktion, deren Korngröße höchstens 40 µm betragen soll, abgetrennt. Je nach Beschaffenheit des Ausgangsmaterials kann die Zerkleinerung mehrere Stufen umfassen, z.B. eine erste Stufe unter Verwendung eines Backenbrechers und eine zweite Stufe unter Verwendung einer Prallmühle.

Für die Herstellung des Grünkörpers wird das Holzkohlemehl mit einem carbonisierbaren Binder vermischt, der entweder in fester Form, d.h. als Pulver, oder als Flüssigkeit vorliegt. Geeignete Binder sind Phenol-Formaldehydharze u.a. mit hoher Kohlenstoffausbeute carbonisierbare Harze wie z.B. Furanharze, sowie alle weiteren aus dem Stand der Technik für die Herstellung carbonisierbarer Grünkörper bekannten Binder wie beispielsweise die in der Patentanmeldung DE 31 08 266 vorgeschlagenen Binder Pech, Teer, Wachsemulsionen, Zuckerlösungen, Polyvinylalkohol.
Die Mischung soll so homogen wie möglich sein. Bei Verwendung eines flüssigen Binders ist darauf zu achten, dass sich keine Konglomerate bilden. Es wurde festgestellt, dass sich mit pulverförmigen Bindern besonders homogene Gemische erzielen lassen, wenn die Partikelgrößen des Binderpulvers und des Holzkohlemehls sich möglichst wenig unterscheiden. Die Homogenität der Mischung kann beispielsweise bei Verwendung eines in Pulverform vorliegenden Phenol-Formaldehyd-Harzes als Binder dank der unterschiedlichen Färbung der Holzkohle- und der Harzpartikel anhand des optischen Eindrucks beurteilt werden.
Der massebezogene Bindergehalt des Gemischs beträgt zwischen 15 und 50 %, bevorzugt 15 bis 45 %, besonders bevorzugt 15 bis 30%.

Aus dem Holzkohlemehl und Binder enthaltenden Gemisch wird ein Grünkörper mit endkonturnahen Abmessungen gepresst, extrudiert oder mittels eines anderen Formgebungsverfahren hergestellt. Beispielsweise kann der Grünkörper auch im Spritzguss hergestellt werden, sofern das Gemisch aus Holzkohlemehl und Binder hinreichend fließfähig ist.
Das beim Formgebungsprozess angewendete Temperaturprogramm ist auf das Schmelz- und Aushärtungsverhalten des Binders abzustimmen. Beispielsweise sind für Phenol-Formaldehyd-Harze als Binder Temperaturprogramme mit einer ersten Haltezeit bei einer für das Aufschmelzen des Harzes ausreichenden Temperatur, einer langsamen Aufheizung auf eine für das Aushärten des Harzes ausreichenden Temperatur und einer längeren Haltezeit bei dieser Temperatur vorzusehen. Durch die langsame Aufheizung wird sichergestellt, dass der exotherme Härtungsprozess nicht unkontrolliert beschleunigt wird.

Die Pyrolyse des Grünkörpers erfolgt bei von ca. 900 °C unter nichtoxidierender Atmosphäre, beispielsweise mit Stickstoff als Schutzgas. Im Verlauf der Pyrolyse werden die aufgrund der unvollständigen Verkohlung in der Holzkohle noch vorhandenen Holzbestandteile abgebaut, und der Binder wird unter Zurückbleiben eines Kohlenstoffrückstands thermisch zersetzt. Aufgrund der mit der Pyrolyse verbundenen Abbauprozesse schwinden Masse und Volumen des Gründkörpers, wobei der Materialschwund des Holzkohleanteils aufgrund der bereits bei der Holzkohleherstellung erfolgten teilweisen Pyrolyse geringer ist als der Materialschwund des Binders. Daher ist die Porosität des pyrolysierten Grünkörpers um so größer, je höher der Bindergehalt des ursprünglichen Grünkörpers war. Bei einem Gehalt des Grünkörpers an Phenol-Formaldehydharz als Binder in den oben angegebenen Grenzen wurden carbonisierte Vorkörper mit einer offenen Porosität zwischen 50 und 65 % und einer Dichte zwischen 0,7 und 0,9 g/cm³ erhalten.
Die aufgrund des geringen Materrialschwunds der Holzkohle gegenüber Grünkörpern aus anderen Ausgangsstoffen, insbesondere aus Holz oder Holzwerkstoffen, verbesserte Formtreue bei der Carbonisierung ist ein wesentlicher Vorzug des erfindungsgemäßen Verfahrens.
Selbstverständlich kann die Pyrolyse auch bei höheren Temperaturen als 900 °C durchgeführt werden, es hat sich jedoch gezeigt, dass bei einer Pyrolysetemperatur bei ca. 900 °C hergestellte Vorkörper Siliciunicarbid-Keramik mit den gewünschten Eigenschaften liefern.

Falls gewünscht, kann eine Nachverdichtung des carbonisierten Vorkörpers vorgenommen werden, indem dieser mit cartbonisierbarem Binder nach-imprägniert und danach nochmals carbonisiert wird. Auf diese Weise kann der Kohlenstoffanteil im carbonisierten Vorkörper erhöht werden. Für die Nachimprägnierung können alle Binder verwendet werden, die auch bei der Grünkörperherstellung eingesetzt werden, jedoch werden praktischerweise flüssige Bindemittel aus dieser Gruppe benutzt.

Der carbonisierte und ggf. nachverdiclitete Vorkörper kann, falls erforderlich, einer Graphitierung bei Temperaturen von über 1400 °C in nichtoxidierender Atmosphäre unterzogen werden. Entsprechende Verfahren und Vorrichtungen sind Stand der Technik.

Für die Silicierung der carbonisierten Vorkörper wird die Infiltration mit flüssigem Silicium über Dochte aus kohlenstoffhaltigem Material bevorzugt. Im Gegensatz zur Tauch- oder Dampfsilicierung, bei der der carbonisierte Vorkörper mit einem Siliciumüberschuss konfrontiert ist, wird über die Dochte Silicium in der Menge vom carbonisierten Vorkörper aufgenommen, wie es bei der Reaktion mit Kohlenstoff zu Siliciumcarbid verbraucht wird. Auf diesem Wege können also dichte (d.h. keine nennenswerte offenen Porosität aufweisende) Keramiken mit einem hohen Gehalt am Siliciumcarbid und einem geringen Anteil an überschüssigem, nicht umgesetzten Silicium erhalten werden.
Bevorzugt wird die Infiltration mit einer Siliciumschmelze bei Temperaturen von mindestens 1420 °C unter Vakuum durchgeführt.
Die geometrische Dichte der silicierten Körper betrug stets mehr als 2,80 g/cm³ und liegt damit deutlich über der Dichte der porösen Körper, deren Herstellung aus DE 31 08 266 bekannt ist. Aus Grünkörpern mit einem massebezogenen Anteil an Phenol-FormaldehydHarz als Binder von mindestens 20 % wurden beispielsweise silicierte keramische Körper mit einer geometrischen Dichte um 3 g/cm³ erhalten. Dieser der Dichte von reinem Siliciumcarbid (3,22 g/cm³) sehr nahe kommende Wert ist ein Anzeichen für einen hohen Siliciumcarbidgehalt der Keramik und eine geringe Gesamtporosität. Mit dem erfindungsgemäßen Verfahren kann Keramik mit einem massebezogenen Gehalt an Siliciumcarbid von über 85 % erhalten werden. Die Restmasse setzt sich aus nicht umgesetztem Kohlenstoff oder/und Silicium sowie Aschebestandteilen zusammen.
Entscheidend für einen hohen Umsatz des Kohlenstoffs und damit einen hohen Anteil an Siliciumcarbid und eine homogene Silicierung in der Keramik ist die Zugänglichkeit des Kohlenstoffs für infiltriertes Silicium. Es hat sich gezeigt, dass in Vorkörpern, die entsprechend der vorliegenden Erfindung hergestellt wurden, d.h. aus Holzkohlemehl mit einer Partikelgröße von maximal 40 µm und mit einem massebezogenen Bindergehalt von 15 bis 50 %, bevorzugt bis maximal 30 %, ein Porensystem vorliegt, welches die weitgehende Zugänglichkeit des Kohlenstoffs und damit eine homogene Silicierung begünstigt.
Ein weiterer Vorteil des von Holzkohlemehl mit einer im Vergleich zum Verfahren aus dem Stand der Technik sehr kleinen Partikelgröße ausgehenden erfindungsgemäßen Verfahrens besteht darin, dass in der Keramik mittels Rasterelektronenmikroskopie nahezu keine Fragmente von Holzstrukturen mehr vorhanden sind. Vergleichsuntersuchungen an Keramiken, die ausgehend von Holzkohlemehl mit einer Partikelgröße bis 250 µm mit ansonsten denselben Verfahrensbedingungen hergestellt wurden, weisen dagegen ein wesentlich inhomogeneres Gefüge auf, in welchem mittels Rasterelektronenmikroskopie noch Reste der ursprünglichen Holzstruktur erkennbar sind.

Die nach dem erfindungsgemäßen Verfahren hergestellte Siliciumcarbid-Keramik ist wegen ihrer kostengünstigen Fertigung aus nachwachsenden Rohstoffen ein wirtschaftlich interessanter Ersatz für auf herkömmlichen Wege hergestellte SiC- und SiSiC-Werkstoffe, die insbesondere für die Herstellung von mechanisch oder/und chemisch oder/und thermisch stark beanspruchten Bauteilen eingesetzt werden.
Dank der hohen Formtreue bei den Hochtemperaturprozessen (Carbonisierung, ggf. Graphitierung, Silicierung) sowie der einfachen Ver- und Bearbeitbarkeit in den vorkeramischen Materialstufen stehen der nach dem erfindungsgemäßen Verfahren hergestellten Keramik aber auch neue Anwendungsfelder offen, welche relativ große, komplexe Strukturen erfordern. Anwendungsbeispiele sind u.a. Spiegelträger, Rohre, Krümmer und andere Strukturelemente für Wärmetauscher, als Brennkammerauskleidungen ballistische Schutzvorrichtungen, Verschleißschutzschichten im Ofenbau, sowie Strukturelemente für den chemischen Apparatebau.
Derartige komplexe Strukturelemente oder Bauteile können beispielsweise realisiert werden, indem Bauteile mit einfachen Geometrien im vorkeramisierten Zustand, d.h. als Grünkörper oder als carbonisierte Vorkörper, durch Fügen miteinander verbunden werden. An den Fügestellen wird als Fügemedium bevorzugt eine Paste aus Holzkohlemehl und carbonisierbarem Binder appliziert. Der gefügten Verbund wird dann in seiner Gesamtheit gemäß dem erfindungsgemäßen Verfahren carbonisiert und siliciert. Dabei wird auch die an den Fügestellen applizierte Paste in Siliciumcarbid enthaltende Keramik umgewandelt.
So werden komplexe Strukturen erhalten, deren einzelne Komponenten alle aus artgleicher Keramik bestehen und an ihren Verbindungsstellen durch artgleiche Keramik miteinander verbunden sind.
Enthält der aus carbonisierten Vorkörpern gefügte Verbund keine ausgedehnten Fügeflächen, die eine großflächige Applikation des Fügemediums nötig machen, so kann der gefügte Verbund auch ohne weitere Carbonisierung direkt siliciert werden. Die Carbonisierung des im Fügemedium enthaltenen Binders erfolgt dann bei der Silicierung.

## Patentansprüche

1. Verfahren zur Herstellung von Siliciumcarbid enthaltender Keramik mit einer geometrischen Dichte von mindestens 2,80 g/cm³, umfassend die Schritte
- Bereitstellen von Holzkohlemehl, dessen Partikel eine Korngröße von maximal 40 µm aufweisen
- Herstellen eines homogenen Gemischs aus dem Holzkohlemehl und einem carbonisierbaren Binder
- Herstellung eines Formkörpers (Grünkörper) aus diesem Gemisch
- Carbonisierung des Grünkörpers zu einem carbonisierten Vorkörper bei einer Temperatur von mindestens 900 °C in nichtoxidierender Atmosphäre
- Silicierung des carbonisierten Vorkörpers durch Infiltration mit einer Siliciumschmelze

2. Verfahren nach Anspruch 1, **dadurch gekennzeichnet, dass** zur Herstellung komplexer Strukturelemente oder Bauteile mehrere Grünkörper oder mehrere carbonisierte Vorkörper zu einem Verbund mit der gewünschten Geometrie zusammengefügt werden, wobei an den Fügestellen ein Fügemedium, z.B. eine Paste, aus Holzkohlemehl und einem carbonisierbaren Binder appliziert wird, und der gefügte Verbund als ganzes carbonisiert und siliciert wird.

3. Verfahren nach Anspruch 1, **dadurch gekennzeichnet, dass** zur Herstellung komplexer Strukturelemente oder Bauteile mehrere carbonisierte Vorkörper zu einem Verbund mit der gewünschten Geometrie zusammengefügt werden, wobei an den Fügestellen ein Fügemedium, z.B. eine Paste, aus Holzkohlemehl und einem carbonisierbaren Binder appliziert wird, und der gefügte Verbund als ganzes siliciert wird.

4. Verfahren nach Anspruch 1, 2 oder 3, **dadurch gekennzeichnet, dass** der massebezogene Anteil des carbonisierbaren Binders am Gemisch aus Holzkohlemehl und Binder 15 bis 50 %, bevorzugt 15 bis 30 % beträgt.

5. Verfahren nach Anspruch 1, 2 oder 3, **dadurch gekennzeichnet, dass** der massebezogene Aschegehalt des Holzkohlemehls nicht mehr als 4 % beträgt.

6. Verfahren nach Anspruch 1, 2 oder 3, **dadurch gekennzeichnet, dass** der bzw. die Grünkörper mittels Spritzgussverfahrens oder durch Extrudieren hergestellt werden.

7. Verfahren nach Anspruch 1 oder 2, **dadurch gekennzeichnet, dass** der carbonisierte Vorkörper bzw. der gefügte Verbund nach der Carbonisierung mit carbonisierbarem Binder nach-imprägniert und danach nochmals bei einer Temperatur von mindestens 900 °C carbonisiert wird.

8. Verfahren nach Anspruch 1, 2, 3 oder 7, **dadurch gekennzeichnet, dass** carbonisierbare Binder aus der Gruppe umfassend Phenol-Formaldehydharze, andere mit hoher Kohlenstoffausbeute carbonisierbare Harze wie Furanharze, Pech, Teer, Wachsemulsionen, Zuckerlösungen, Polyvinylalkohol eingesetzt werden.

9. Verfahren nach Anspruch 1, 2 bzw. 7, **dadurch gekennzeichnet, dass** der carbonisierte bzw. der nach-imprägnierte und danach erneut carbonisierte Vorkörper einer Graphitierung bei Temperaturen von über 1400 °C in nichtoxidierender Atmosphäre unterzogen wird.

10. Verfahren nach Anspruch 1, 2, 3, 7 oder 9, **dadurch gekennzeichnet, dass** die Infiltration der Siliciumschmelze bei einer Temperatur von mindestens 1420 °C unter Vakuum erfolgt.

11. Verfahren nach Anspruch 1, 2, 3, 7 oder 9, **dadurch gekennzeichnet, dass** der massebezogene Siliciumgehalt der Keramik mindestens 85% beträgt, wobei die Restmasse sich aus nicht umgesetztem Kohlenstoff oder/und Silicium sowie Aschebestandteilen zusammensetzt.

12. Verfahren nach Anspruch 1, 2, 3, 7 oder 9, **dadurch gekennzeichnet, dass** die geometrische Dichte der Siliciumcarbid enthaltenden Keramik größer als 2,95 g/cm³, bevorzugt größer als 3,00 g/cm³ ist.

13. Verwendung der mit dem Verfahren gemäß Anspruch 1, 2, 3, 7 oder 9 hergestellten Strukturelemente als Spiegelträger, in ballistischen Schutzvorrichtungen, in Wärmetauschem, im Ofenbau, als Brennkammerauskleidungen sowie im chemischen Apparatebau.
